(19) Europäisches Patentamt
European Patent Office
Office européen des brevets

(11) **EP 3 735 533 B1**

(12) **EUROPÄISCHE PATENTSCHRIFT**

(45) Veröffentlichungstag und Bekanntmachung des Hinweises auf die Patenterteilung:
**23.11.2022 Patentblatt 2022/47**

(21) Anmeldenummer: **19700077.1**

(22) Anmeldetag: **03.01.2019**

(51) Internationale Patentklassifikation (IPC):
**F03D 7/02** (2006.01)

(52) Gemeinsame Patentklassifikation (CPC):
**F03D 7/0236;** F05B 2240/2021; F05B 2270/324;
F05B 2270/325; F05B 2270/327; F05B 2270/337;
Y02E 10/72

(86) Internationale Anmeldenummer:
**PCT/EP2019/050094**

(87) Internationale Veröffentlichungsnummer:
**WO 2019/134939 (11.07.2019 Gazette 2019/28)**

(54) **VERFAHREN ZUM STEUERN EINER WINDENERGIEANLAGE SOWIE WINDENERGIEANLAGE**

METHOD FOR CONTROLLING A WIND TURBINE, AND WIND TURBINE

PROCÉDÉ POUR COMMANDER UNE ÉOLIENNE ET ÉOLIENNE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **04.01.2018 DE 102018100129**

(43) Veröffentlichungstag der Anmeldung:
**11.11.2020 Patentblatt 2020/46**

(73) Patentinhaber: **Wobben Properties GmbH
26607 Aurich (DE)**

(72) Erfinder:
• **MESSING, Ralf
26605 Aurich (DE)**
• **KIMILLI, Mustafa Onur
81371 München (DE)**
• **MAAß, Hauke
8000 Aarhus (DK)**

(74) Vertreter: **Eisenführ Speiser
Patentanwälte Rechtsanwälte PartGmbB
Postfach 10 60 78
28060 Bremen (DE)**

(56) Entgegenhaltungen:
**EP-A2- 2 818 694      US-A1- 2003 044 274
US-A1- 2010 158 687**

**Beschreibung**

Die vorliegende Erfindung betrifft ein Verfahren zum Steuern einer Windenergieanlage sowie eine Windenergieanlage.

Eine Windenergieanlage weist einen aerodynamischen Rotor mit einer Anzahl von Rotorblättern, insbesondere drei auf. Nach wie vor sind die Stromgestehungskosten (Cost of Energy) sehr hoch für eine Windenergieanlage. Die Stromgestehungskosten können beispielsweise durch eine Windenergieanlage mit einer variablen Länge der Rotorblätter reduziert werden. Insbesondere kann dies durch Begrenzung der maximalen Schlagbiegemomente (verkleinerte Rotorkreisfläche im oberen Windgeschwindigkeitsbereich) bei gleichzeitig optimaler Energieausbeute (vergrößerte Rotorkreisfläche im unteren Windgeschwindigkeitsbereich) verglichen mit konventionellen Rotorblättern, erfolgen.

US 6,972,498 B2 und US 2003/0044274 A1 beschreiben eine Windenergieanlage mit Rotorblättern, deren Länge variierbar ist. Die Länge der Rotorblätter wird reduziert, wenn die Windgeschwindigkeit einen Grenzwert überschreitet, oder wenn die durch die Windenergieanlage erzeugte Leistung einen Grenzwert überschreitet.

In der prioritätsbegründenden deutschen Patentanmeldung hat das Deutsche Patent- und Markenamt die folgenden Dokumente recherchiert: DE 10 2010 054 013 A1, DE 10 2010 054 014 A1, US 6 972 498 B2, US 7 071 578 B1, US 2003 / 0 223 868 A1 und US 2012/0 093 627 A1.

Es ist daher eine Aufgabe der vorliegenden Erfindung ein Verfahren zum Steuern einer Windenergieanlage mit Rotorblättern mit variabler Länge vorzusehen.

Diese Aufgabe wird durch ein Verfahren nach Anspruch 1 gelöst.

Somit wird ein Verfahren zum Steuern einer Windenergieanlage vorgesehen, welche einen aerodynamischen Rotor mit einem variablen Radius aufweist. Der aerodynamische Rotor weist mindestens ein Rotorblatt auf, dessen Länge einstellbar ist. Eine Drehzahl und/oder ein Drehmoment des aerodynamischen Rotors sowie eine Luftdichte in der Umgebung der Windenergieanlage wird erfasst und die Länge des mindestens einen Rotorblattes wird in Abhängigkeit der Drehzahl und/oder des Drehmoments des aerodynamischen Rotors sowie der erfassten Luftdichte in der Umgebung der Windenergieanlage gesteuert. Ferner wird ein vorgegebener maximal zulässiger Schalldruck mit berücksichtigt.

Gemäß einem weiteren Aspekt der vorliegenden Erfindung wird die erfasste Drehzahl und/oder das erfasste Drehmoment des aerodynamischen Rotors mit einem Schwellwert verglichen. Die Länge des mindestens einen Rotorblattes wird bei steigender Drehzahl und/oder steigendem Drehmoment reduziert, wenn die Drehzahl und/oder das Drehmoment größer als der Schwellwert ist.

Gemäß der vorliegenden Erfindung wird die erfasste Luftdichte mit mindestens einem Luftdichteschwellwert verglichen und die Länge des mindestens einen Rotorblattes wird reduziert, wenn die Drehzahl und/oder das Drehmoment über einem zweiten Schwellwert liegt. Der zweite Schwellwert der Drehzahl und/oder das Drehmoment ist größer als der erste Schwellwert der Drehzahl und/oder des Drehmomentes.

Die Erfindung betrifft ebenfalls eine Windenergieanlage mit einem aerodynamischen Rotor mit mindestens einem teleskopierbaren Rotorblatt, d.h. seine Länge ist einstellbar. Jedes Rotorblatt weist einen ersten und zweiten Abschnitt und eine Verstelleinheit auf, mittels welcher der zweite Abschnitt entlang einer Längsrichtung des Rotorblattes verstellbar ist, um die Länge des Rotorblattes einzustellen. Die Windenergieanlage weist ferner einen Sensor zum Erfassen einer Luftdichte und eine Steuereinheit auf, weiche mit den Verstelleinheiten des mindestens einen Rotorblattes gekoppelt ist und eine Drehzahl und/oder ein Drehmoment des aerodynamischen Rotors sowie die Luftdichte als Eingangsgröße aufweist und dazu ausgestaltet ist, die Länge des mindestens einen Rotorblattes in Abhängigkeit der Drehzahl und/oder des Drehmomentes des aerodynamischen Rotors der Windenergieanlage, der Luftdichte und eines vorgegebenen maximal zulässigen Schalldrucks zu steuern. Die Steuereinheit ist dazu ausgestaltet, die Länge des Rotorblattes zu reduzieren, wenn die Drehzahl über einem zweiten Schwellwert liegt, wobei der zweite Schwellwert der Drehzahl umgekehrt proportional zur Luftdichte gesetzt wird.

Gemäß einem weiteren Aspekt der vorliegenden Erfindung ist die Steuereinheit dazu ausgestaltet, eine Luftdichte in der Umgebung der Windenergieanlage als Eingangsgröße zu empfangen und die Länge des mindestens einen Rotorblattes auch in Abhängigkeit der Luftdichte zu steuern.

Die Erfindung betrifft den Gedanken, eine Windenergieanlage mit Rotorblättern zu steuern, deren Länge variabel ist. Die Länge der Rotorblätter wird in Abhängigkeit der Drehzahl und/oder des Drehmomentes des aerodynamischen Rotors der Windenergieanlage gesteuert. Hierbei kann die Länge der Rotorblätter in Abhängigkeit einer steigenden Drehzahl und/oder eines steigenden Drehmomentes reduziert werden, sofern beispielsweise ein Grenzwert einer Drehzahl und/oder eines Drehmomentes überschritten worden ist.

Die Länge der Rotorblätter kann ferner abhängig sein von einem maximalen aerodynamischen Schlagbiegemoment, einer maximal zulässigen Blattspitzengeschwindigkeit, einem zulässigen Profilanstellwinkel im Betriebsbereich und/oder einer konstruktiv-vorgesehenen, maximalen Teleskopiergeschwindigkeit.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.

Fig. 1    zeigt eine schematische Darstellung einer Windenergieanlage gemäß der Erfindung,

Fig. 2    zeigt eine schematische Darstellung eines Rotorblatts mit variabler Länge,

Fig. 3    zeigt einen Graphen zur Veranschaulichung der Abhängigkeit des Radius des aerodynamischen Rotors in Abhängigkeit der Drehzahl,

Fig. 4A    zeigt einen Graphen zur Veranschaulichung der Abhängigkeit des Radius des aerodynamischen Rotors in Abhängigkeit der Drehzahl für verschiedene Luftdichten,

Fig. 4B    zeigt einen Graphen zur Veranschaulichung des Zusammenhangs zwischen dem Radius des aerodynamischen Rotors, der Drehzahl des aerodynamischen Rotors und verschiedener Luftdichten, und

Fig. 5    zeigt einen Graphen zur Veranschaulichung einer Leistungskurve einer konventionellen Windenergieanlage sowie einer Windenergieanlage mit einem aerodynamischen Rotor, dessen Radius variabel ist.

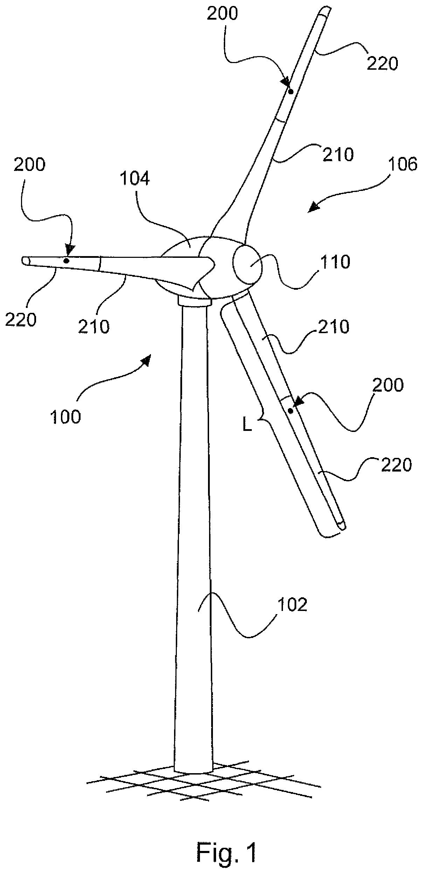

Fig. 1 zeigt eine schematische Darstellung einer Windenergieanlage gemäß der Erfindung. Die Windenergieanlage 100 weist einen Turm 102, eine Gondel 104, einen aerodynamischen Rotor 106 auf, der einen Spinner 110 sowie drei Rotorblätter 200 aufweist. Der aerodynamische Rotor 106 wird durch den Wind in eine Drehbewegung versetzt. Der aerodynamische Rotor 106 ist mit einem nicht gezeigten elektrischen Generator gekoppelt und eine Drehung des aerodynamischen Rotors führt zu einer Drehung des elektrischen Generators, der daraus wiederum elektrische Leistung erzeugen kann.

Die Rotorblätter 200 weisen einen einstellbaren Pitchwinkel auf. Die Rotorblätter 200 weisen ferner einen ersten und zweiten Abschnitt 210, 220 auf und die Länge des Rotorblattes und damit der Radius des aerodynamischen Rotors 106 ist variabel. Die Länge L des Rotorblattes 200 wird durch den ersten und zweiten Abschnitt 210, 220 bestimmt. Der erste Abschnitt 210 des Rotorblattes 200 wird an dem aerodynamischen Rotor 106 befestigt. Der zweite Abschnitt 220 wird an dem ersten Abschnitt 210 des Rotorblatts derart befestigt, dass die Länge L des Rotorblattes variiert werden kann. Dies kann beispielsweise dadurch erfolgen, dass der zweite Abschnitt 220 in bzw. relativ zu dem ersten Abschnitt 210 verfahrbar ist.

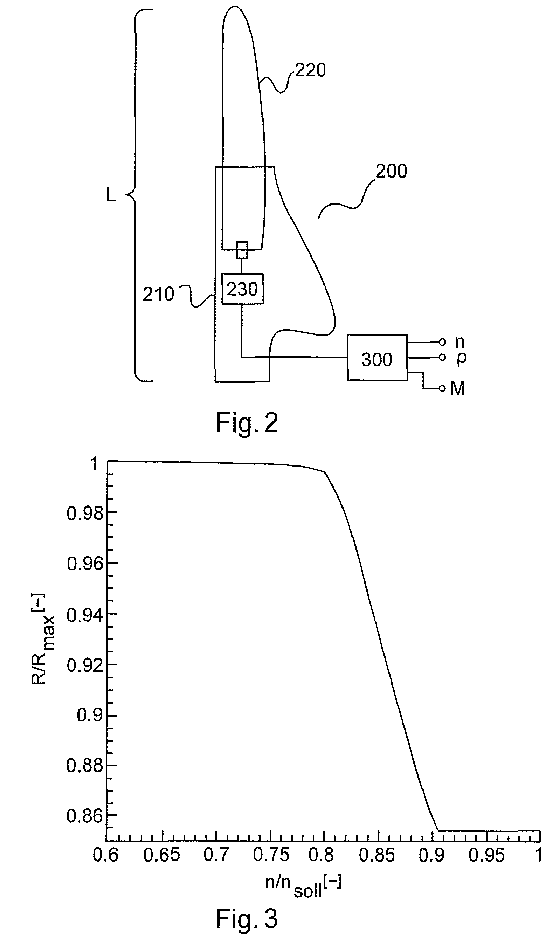

Fig. 2 zeigt eine schematische Darstellung eines Rotorblattes mit variabler Länge. Das Rotorblatt 200 weist einen ersten Abschnitt 210 und einen zweiten Abschnitt 220 auf, welcher mittels einer Verstelleinheit 230 in einer Längsrichtung des Rotorblattes verfahrbar ist, so dass die Länge L des Rotorblattes 200 verstellt werden kann. Hierbei kann der erste Abschnitt 210 die Rotorblattwurzel des Rotorblatts 200 darstellen und kann an einer Nabe der Windenergieanlage befestigt werden. Die Verstelleinheit 230 ermöglicht ein Verfahren des zweiten Abschnitts 220 entlang einer Längsrichtung des Rotorblattes 200. Die Verstelleinheit 230 ist mit einer Steuereinheit 300 gekoppelt. Die Steuereinheit 300 steuert die Verstelleinheit 230, um die Länge L des Rotorblattes einzustellen. Die Steuereinheit 300 weist einen Eingang für die Drehzahl n und/oder für den Drehmoment M sowie optional einen Eingang für die aktuelle Luftdichte p auf. In Abhängigkeit der Drehzahl und/oder des Drehmomentes sowie optional in Abhängigkeit der Luftdichte kann die Steuereinheit 300 den Betrieb der Verstelleinheit 230 und damit die Länge des Rotorblattes 200 steuern. Damit kann die Drehzahl n und/oder der Drehmoment M des aerodynamischen Rotors 106 der Windenergieanlage als Eingangsgröße für die Steuerung der Länge des Rotorblattes dienen.

Gemäß der Erfindung kann jedes Rotorblatt 200 über eine einstellbare Länge und eine Verstelleinheit verfügen.

Fig. 3 zeigt einen Graphen zur Veranschaulichung der Abhängigkeit des Radius R des aerodynamischen Rotors in Abhängigkeit der Drehzahl. Ab einem Schwellwert kann bei steigender Drehzahl der Radius R des aerodynamischen Rotors 106 reduziert werden. Dies kann durch die Steuereinheit 300, welche mit den Verstelleinheiten 230 jedes Rotorblattes 200 gekoppelt ist, erfolgen. Durch Variation der Länge der Rotorblätter wird auch der Radius des aerodynamischen Rotors verändert.

Gemäß der Erfindung wird der Radius R des aerodynamischen Rotors in Abhängigkeit der Drehzahl gemäß der folgenden Radiuskennlinie gesteuert:

$$R = f(n) \qquad\qquad (Gl.\ 1)$$

Alternativ oder zusätzlich kann eine Steuerung der Länge des Rotorblattes in Abhängigkeit vom Drehmoment M erfolgen:

$$R = f(M) \tag{Gl. 2}$$

Die Änderung der Blattlänge R hat über den Zusammenhang

$$v_{Tip} = \omega \cdot R = n \cdot \frac{\pi}{30} \cdot R \tag{Gl. 3}$$

direkt Einfluss auf die Blattspitzengeschwindigkeit $v_{Tip}$ und damit die Schnelllaufzahl $\lambda$ (engl.: Tip-speed-ratio, TSR), die das Verhältnis aus Blattspitzengeschwindigkeit und Windgeschwindigkeit wiedergibt. Damit besteht eine direkte Rückkoppelung zwischen der Radiuskennlinie und der Betriebskennlinie, die den Zusammenhang zwischen Drehzahl und Anlagenleistung darstellt sowie der Pitchkennlinie, die den Blatteinstellwinkel über der Anlagenleistung steuert.

Die Abhängigkeit des Radius des aerodynamischen Rotors von der Drehzahl wird ferner durch ein vorgegebenes maximales aerodynamisches Schlagbiegemoment, einen maximal zulässigen Schalldruckpegel, einen zulässigen Anstellwinkel im Betriebsbereich und/oder einer konstruktiv-vorgegebenen, maximalen Teleskopiergeschwindigkeit beeinflusst.

Für das maximal aerodynamische Schlagbiegemoment kann erfindungsgemäß bei der Auslegung der Radiuskennlinie als Grenzwert das Schlagbiegemoment der Anlage mit einem Rotordurchmesser gleich der Dimension des eingefahrenen variablen Rotors verwendet werden.

Für einen maximalen Schalldruckpegel (Sound Pressure Level, SPL) muss eine Begrenzung der Blattspitzengeschwindigkeit vorgesehen werden. Es gilt:

$$SPL = f(v_{Tip}) \tag{Gl. 4}$$

Der Schalldruckpegel SPL ist neben der Blattspitzengeschwindigkeit auch abhängig von atmosphärischen Bedingungen (Dichte und Temperatur). Eine maximale zulässige Blattspitzengeschwindigkeit ergibt sich in Abhängigkeit der Luftdichte $\rho$ aus:

$$v_{Tip,korr} = v_{Tip} \cdot \left(\frac{\rho_{norm}}{\rho}\right)^{\frac{2}{5}} \tag{Gl. 5}$$

mit $v_{Tip,korr}$ als zulässige Blattspitzengeschwindigkeit bei der Luftdichte $\rho$ und $v_{Tip}$ als zulässige Blattspitzengeschwindigkeit bei der Normluftdichte $\rho_{norm}$. Man erkennt, dass bei beispielsweise niedrigeren Luftdichten als der Normluftdichte für gleichbleibende Schalldruckpegel höhere Blattspitzengeschwindigkeiten zulässig sind.

Damit ist die Funktion des Radius des aerodynamischen Rotors der Windenergieanlage sowohl abhängig von der Drehzahl oder des Drehmomentes M als auch von der Luftdichte:

$$R = f(n, \rho) \tag{Gl. 6}$$

bzw.

$$R = f(M, \rho) \tag{Gl. 7}$$

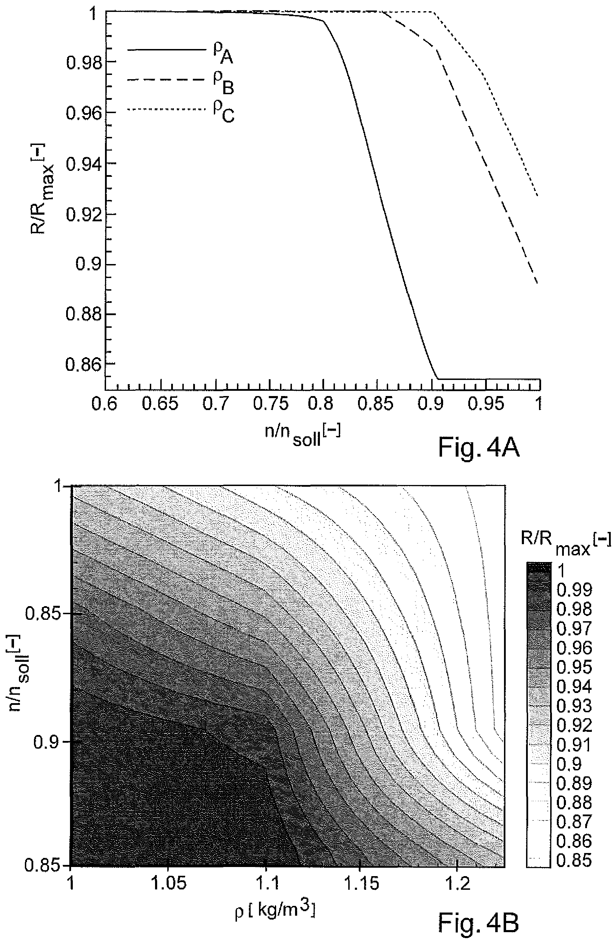

Fig. 4A zeigt einen Graphen zur Veranschaulichung der Abhängigkeit des Radius des aerodynamischen Rotors von der Drehzahl für verschiedene Luftdichten. In Fig. 4A ist die Kennlinie des Radius des aerodynamischen Rotors bei drei verschiedenen Luftdichten dargestellt. Hierbei gilt $\rho_C < \rho_B < \rho_A$

Fig. 4B zeigt einen Graphen zur Veranschaulichung des Zusammenhangs zwischen dem Radius des aerodynamischen Rotors, der Drehzahl des aerodynamischen Rotors und verschiedener Luftdichten. Die Auswirkung der Luftdichte auf die Abhängigkeit zwischen dem Radius R des aerodynamischen Rotors und der Drehzahl n lässt sich dadurch erklären, dass eine geringere Luftdichte eine Reserve in dem maximalen Schlagbiegemoment sowie in der maximal zulässigen Blattspitzengeschwindigkeit ermöglicht. Wenn die Luftdichte bei der Regelung des Radius des aerodynamischen Rotors mit berücksichtigt wird, kann dies zu einer verzögerten Reduktion der Länge der Rotorblätter und damit des Radius des aerodynamischen Rotors führen. Dies wiederum ermöglicht eine bessere Energieausbeute.

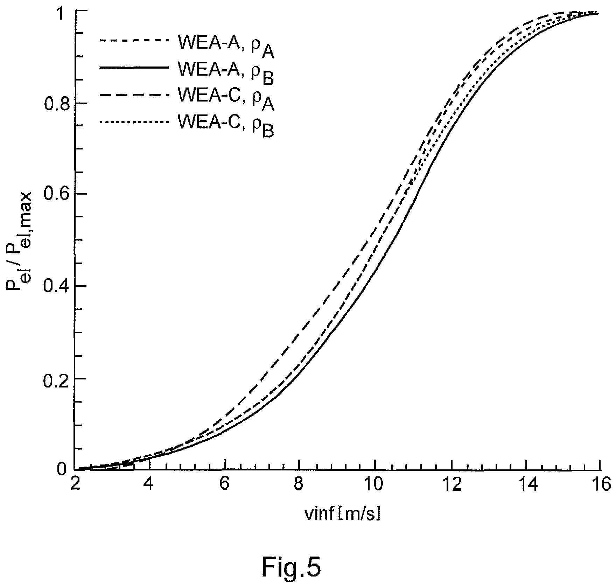

Fig. 5 zeigt einen Graphen zur Veranschaulichung einer Leistungskurve einer konventionellen Windenergieanlage sowie einer Windenergieanlage mit einem aerodynamischen Rotor, dessen Radius variabel ist. In Fig. 5 sind vier verschiedene Kennlinien der Ausgangsleistung in Abhängigkeit der Windgeschwindigkeit dargestellt. Die Kurve WEA-A beschreibt eine konventionelle Windenergieanlage mit einem Radius, welcher dem kleinstmöglichsten Radius der erfindungsgemäßen Windenergieanlage entspricht. Die Leistung dieser Windenergieanlage ist für zwei verschiedene Luftdichten, $\rho_A$ und $\rho_B$, dargestellt. Die Windenergieanlage WEA-C stellt eine Windenergieanlage mit einem variablen Rotorradius dar. In Fig. 5 ist die Luftdichte $\rho_B$ kleiner der Luftdichte $\rho_A$.

Bei der erfindungsgemäßen Windenergieanlage kann die Steuerung des Radius bzw. des Durchmessers des aerodynamischen Rotors und damit der Länge der Rotorblätter als starre Kennlinie festgelegt werden.

Gemäß einem weiteren Aspekt der vorliegenden Erfindung kann die Steuerung des Radius des aerodynamischen Rotors zusätzlich oder alternativ dazu basierend auf Messdaten wie beispielsweise des Schlagbiegemoments an der Rotorblattwurzel erfolgen.

Die erfindungsgemäße Windenergieanlage stellt eine drehzahlvariable, pitchgesteuerte Windenergieanlage dar, welche die Länge der Rotorblätter und damit den Radius bzw. den Durchmesser des aerodynamischen Rotors einstellen kann. Anhand der Rotordrehzahl/des Drehmomentes und optional der Luftdichte wird die Länge der Rotorblätter gesteuert.

Mit der erfindungsgemäßen Windenergieanlage kann die Effektivität und damit die Jahreserträge verbessert werden, ohne dabei ebenfalls die mechanische Belastung der Windenergieanlage und insbesondere die Extremlasten zu erhöhen. Die Erhöhung des Jahresertrags ist tendenziell umso größer je geringer die mittlere Jahreswindgeschwindigkeit und die mittlere Dichte ist.

**Patentansprüche**

1. Verfahren zum Steuern einer Windenergieanlage (100), welche einen aerodynamischen Rotor (106) mit einem variablen Radius (R) aufweist, wobei der aerodynamische Rotor (106) mindestens ein Rotorblatt (200) aufweist, dessen Länge (L) einstellbar ist, mit den Schritten:

    - Erfassen einer Drehzahl (n) und/oder eines Drehmomentes (M) des aerodynamischen Rotors (106),
    - Erfassen einer Luftdichte in der Umgebung der Windenergieanlage (100),
    - Steuern der Länge (L) des mindestens einen Rotorblattes (200) in Abhängigkeit der Drehzahl (n) und/oder des Drehmomentes (M) des aerodynamischen Rotors (106), der erfassten Luftdichte in der Umgebung der Windenergieanlage (100) und eines vorgegebenen maximal zulässigen Schalldruckpegels, und
    - Reduzieren der Länge (L) des mindestens einen Rotorblattes (200), wenn die Drehzahl (n) über einem zweiten Schwellwert liegt,

    **dadurch gekennzeichnet, dass** der zweite Schwellwert der Drehzahl (n) umgekehrt proportional zur Luftdichte gesetzt wird.

2. Verfahren zum Steuern einer Windenergieanlage (100) nach Anspruch 1, mit den Schritten:

    - Vergleichen der erfassten Drehzahl (n) des aerodynamischen Rotors (106) mit einem Schwellwert und
    - Reduzierung der Länge (L) des mindestens einen Rotorblattes (200) bei steigender Drehzahl (n), wenn die Drehzahl (n) größer als der Schwellwert ist.

3. Windenergieanlage (100), mit

    einem aerodynamischen Rotor (106) mit mindestens einem Rotorblatt (200), dessen Länge (L) einstellbar ist, wobei das mindestens eine Rotorblatt (200) einen ersten und zweiten Abschnitt (210, 220) und eine Verstelleinheit (230) aufweist, mittels welcher der zweite Abschnitt (220) entlang einer Längsrichtung des Rotorblatts (200) verstellbar ist, um die Länge (L) des Rotorblattes (200) einzustellen, und
    einer Steuereinheit (300), welche mit den Verstelleinheiten (230) des mindestens einen Rotorblattes (200) gekoppelt ist und eine Drehzahl (n) und/oder ein Drehmoment (M) des aerodynamischen Rotors (106) und eine Luftdichte als Eingangsgröße aufweist, und dazu ausgestaltet ist, die Länge (L) des mindestens einen Rotorblattes (200) in Abhängigkeit der Drehzahl (n) und/oder des Drehmoments, des aerodynamischen Rotors (106) der Windenergieanlage (100) und der Luftdichte unter Berücksichtigung eines vorgegebenen maximal zulässigen Schalldruckpegels zu steuern,
    wobei die Steuereinheit (300) dazu ausgestaltet ist, die Länge des Rotorblattes (200) zu reduzieren, wenn die Drehzahl über einem zweiten Schwellwert liegt,

**EP 3 735 533 B1**

**dadurch gekennzeichnet, dass**
der zweite Schwellwert der Drehzahl umgekehrt proportional zur Luftdichte gesetzt wird.

**Claims**

1. Method for controlling a wind turbine (100) which has an aerodynamic rotor (106) having a variable radius (R), wherein the aerodynamic rotor (106) has at least one rotor blade (200), whose length (L) can be adjusted, having the steps of:

   - detecting a speed (n) and/or a torque (M) of the aerodynamic rotor (106),
   - detecting an air density in the environment of the wind turbine (100),
   - controlling the length (L) of the at least one rotor blade (200) in accordance with the speed (n) and/or the torque (M) of the aerodynamic rotor (106), the detected air density in the environment of the wind turbine (100) and a predetermined maximum permissible sound pressure level, and
   - reducing the length (L) of the at least one rotor blade (200) when the speed (n) is above a second threshold value, **characterised in that** the second threshold value of the speed (n) is set to be inversely proportional to the air density.

2. Method for controlling a wind turbine (100) according to claim 1, having the steps of:

   - comparing the detected speed (n) of the aerodynamic rotor (106) with a threshold value, and
   - reducing the length (L) of the at least one rotor blade (200) when the speed (n) increases if the speed (n) is greater than the threshold value.

3. Wind turbine (100) having

   an aerodynamic rotor (106) having at least one rotor blade (200) whose length (L) can be adjusted,
   wherein the at least one rotor blade (200) has a first and second portion (210, 220) and an adjustment unit (230), by means of which the second portion (220) can be adjusted in a longitudinal direction of the rotor blade (200) in order to adjust the length (L) of the rotor blade (200), and
   a control unit (300) which is coupled to the adjustment units (230) of the at least one rotor blade (200) and which has a speed (n) and/or a torque (M) of the aerodynamic rotor (106) and an air density as an input variable, and which is configured to control the length (L) of the at least one rotor blade (200) in accordance with the speed (n) and/or the torque of the aerodynamic rotor (106) of the wind turbine (100) and the air density taking into account a predetermined maximum permissible noise pressure level,
   wherein the control unit (300) is configured to reduce the length of the rotor blade (200) if the speed is above a second threshold value,
   **characterised in that** the second threshold value of the speed is set to be inversely proportional to the air density.

**Revendications**

1. Procédé pour commander une éolienne (100), laquelle présente un rotor aérodynamique (106) avec un rayon (R) variable, dans lequel le rotor aérodynamique (106) présente au moins une pale de rotor (200), dont la longueur (L) est réglable, avec les étapes :

   - de détection d'une vitesse de rotation (n) et/ou d'un couple de rotation (M) du rotor aérodynamique (106),
   - de détection d'une densité atmosphérique dans l'environnement de l'éolienne (100),
   - de commande de la longueur (L) de la au moins une pale de rotor (200) en fonction de la vitesse de rotation (n) et/ou du couple de rotation (M) du rotor aérodynamique (106), de la densité atmosphérique détectée dans l'environnement de l'éolienne (100) et d'un niveau de pression acoustique admissible maximal prédéfini, et
   - de réduction de la longueur (L) de la au moins une pale de rotor (200), lorsque la vitesse de rotation (n) se situe au-dessus d'une deuxième valeur de seuil,

   **caractérisé en ce que**
   la deuxième valeur de seuil de la vitesse de rotation (n) est fixée de manière inversement proportionnelle à la densité atmosphérique.

6

**2.** Procédé pour commander une éolienne (100) selon la revendication 1, avec les étapes :

- de comparaison de la vitesse de rotation (n) détectée du rotor aérodynamique (106) à une valeur de seuil et
- de réduction de la longueur (L) de la au moins une pale de rotor (200) lorsque la vitesse de rotation (n) augmente, lorsque la vitesse de rotation (n) est supérieure à la valeur de seuil.

**3.** Eolienne (100), avec

un rotor aérodynamique (106) avec au moins une pale de rotor (200), dont la longueur (L) est réglable, dans laquelle la au moins une pale de rotor (200) présente une première et une deuxième partie (210, 220) et une unité de déplacement (230), au moyen de laquelle la deuxième partie (220) peut être déplacée le long d'une direction longitudinale de la pale de rotor (200), afin de régler la longueur (L) de la pale de rotor (200), et une unité de commande (300), laquelle est accouplée aux unités de déplacement (230) de la au moins une pale de rotor (200) et présente une vitesse de rotation (n) et/ou un couple de rotation (M) du rotor aérodynamique (106) et une densité atmosphérique en tant que grandeur d'entrée, et est conçue pour commander la longueur (L) de la au moins une pale de rotor (200) en fonction de la vitesse de rotation (n) et/ou du couple de rotation du rotor aérodynamique (106) de l'éolienne (100) et de la densité atmosphérique avec prise en compte d'un niveau de pression acoustique admissible maximal prédéfini, dans laquelle l'unité de commande (300) est conçue pour réduire la longueur de la pale de rotor (200), lorsque la vitesse de rotation se situe au-dessus d'une deuxième valeur de seuil,
**caractérisée en ce que**
la deuxième valeur de seuil de la vitesse de rotation est fixée de manière inversement proportionnelle à la densité atmosphérique.

Fig. 1

Fig. 2

Fig. 3

Fig. 4A

Fig. 4B

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6972498 B2
- US 20030044274 A1
- DE 102010054013 A1
- DE 102010054014 A1
- US 7071578 B1
- US 20030223868 A1
- US 20120093627 A1